Europäisches Patentamt

European Patent Office

Office européen des brevets

(19)

(11) Numéro de publication: **0 287 411 B1**

(12) **FASCICULE DE BREVET EUROPEEN**

(45) Date de publication du fascicule du brevet:
**14.11.90**

(21) Numéro de dépôt: **88400653.7**

(22) Date de dépôt: **18.03.88**

(51) Int. Cl.⁵: **F16C 11/06,** F16C 11/10,
F16F 9/54

(54) **Articulation démontable à rotule.**

(30) Priorité: **01.04.87  FR 8704547**

(43) Date de publication de la demande:
**19.10.88 Bulletin 88/42**

(45) Mention de la délivrance du brevet:
**14.11.90 Bulletin 90/46**

(84) Etats contractants désignés:
**AT BE CH DE ES FR GB IT LI LU NL SE**

(56) Documents cités:
**FR-A- 2 399 578
FR-A- 2 439 901
GB-A- 323 976**

(73) Titulaire: **AIRAX, Z.I. Besançon-Chemaudin,
F-25320 Montferrand-Le-Chateau(FR)**

(72) Inventeur: **Dony, Dominique, Braillans,
F-25640 Roulans(FR)**
Inventeur: **Humblot, Jacky, 21 rue des Vignerons,
F-25000 Besancon(FR)**

(74) Mandataire: **Colas, Jean-Pierre et al, Cabinet de
Boisse 37, avenue Franklin D. Roosevelt,
F-75008 Paris(FR)**

## Description

La présente invention est relative à une articulation démontable à rotule, utilisable en particulier pour relier un ressort à gaz à un organe-support.

Sur les véhicules automobiles, les ressorts à gaz utilisés pour équilibrer les volets mobiles tels que capot, coffre ou hayon sont reliés à la carrosserie, le plus souvent, par l'intermédiaire d'articulations à rotule. Cette articulation est en général constituée de deux parties : une rotule en acier solidaire de la carrosserie et du volet, et une cage en matière plastique ou en métal solidaire du ressort à gaz.

Les ressorts à gaz sont souvent montés dans les gouttières situées de part et d'autre du hayon, ils sont soumis aux intempéries, donc à la corrosion, particulièrement à la base de la cage qui est montée sur le fond du tube, car il peut y avoir rétention d'eau dans cette zone.

D'autre part, les exigences de productivité font que l'on désire utiliser des articulations qui puissent être montées très rapidement, de préférence en une seule opération, celle-ci comprenant à la fois la mise en place de la cage sur la rotule et la mise en position active des moyens de verrouillage. Cela exclut des articulations de type ancien, avec lesquelles on doit opérer en deux temps : d'abord mettre la bague sur la rotule par un déplacement parallèle à l'axe du tourillon qui porte la rotule, puis déplacer les moyens de verrouillage dans une direction différente, par exemple en les faisant coulisser perpendiculairement au tourillon.

Le brevet GB-A-323.976 avait décrit une articulation à rotule d'un type différent. Cette articulation à rotule comprend, comme les autres, d'une part, une rotule sphérique, solidaire d'un tourillon, et, d'autre part, une cage présentant une cavité apte à recevoir sensiblement sans jeu la rotule, et reliée à l'extérieur par un canal cylindrique de même diamètre, ladite cage étant pourvue par ailleurs de moyens de fixation à un support. La particularité de l'articulation de ce brevet est qu'elle est pourvue d'une bague élastique, dans son ensemble en forme de C, dont le corps entoure ladite cage en passant au-delà du fond de la cavité, et dont les extrémités pénètrent dans deux fentes de la cage, disposées de part et d'autre du canal, de largeur constante et débouchant dans le canal pour permettre aux extrémités de la bague de faire saillie à l'intérieur du canal et de retenir la rotule dans la cavité, ces fentes étant obliques par rapport à l'axe du canal et s'écartant du centre de la cavité en convergeant vers ledit axe. Il résulte de cette disposition qu'une force tendant à faire sortir la rotule de son logement produit un effect de coincement des extrémités de la bague dans leurs fentes, ce qui s'oppose efficacement à la sortie de la rotule.

Pour le montage, le document GB-A-323.976 prévoit l'utilisation d'un petit outil, en forme de languette, livré avec la cage et placé entre l'extérieur de celle-ci et la bague, près du débouché extérieur d'une fente. En faisant pivoter cet outil, on écarte l'extrémité de la bague de l'axe du canal. Le montage comprend donc trois opérations : écarter les extrémités de la bague, introduire la rotule dans la cage, relâcher la bague. On pourrait, toutefois, concevoir que, par un choix judicieux de la forme et de l'angle des extrémités de la bague, celles-ci puissent être écartées par la rotule elle-même, si bien que le montage se ferait en une seule opération. L'outil en forme de languette resterait cependant nécessaire pour le démontage, et on courrait le risque de voir ce démontage impossible si, par suite d'une accessibilité latérale insuffisante, on pouvait procéder à la mise en place par simple déplacement relatif de la cage et de la rotule sans pouvoir ensuite actionner l'outil. Le dispositif de ce document présente, en outre, un risque de corrosion à l'endroit où la bague est constamment en contact avec la rotule, car l'usure enlève la protection à l'endroit du contact.

Les modifications à apporter à la cage du document GB-A-323.976 pour permettre le montage en une seule opération se révèlent poser de multiples problèmes. Si l'angle que font les extrémités de la bague avec l'axe du canal se rapproche de l'angle droit, selon l'écartement de ces extrémités entre elles, on peut avoir ou bien un montage facile mais une absence de verrouillage efficace, ou bien un montage impossible ou risquant de fausser la bague, mais un verrouillage très efficace. Si la forme de la bague se rapproche de celle d'un arc de cercle, elle risque de tourner sur elle-même lors du transport ou des manipulations précédant le montage, et d'obstruer le canal, ce qui rend ce montage impossible.

Le même évènement fâcheux peut se produire au moment du montage, si, par suite d'une irrégularité, la rotule pousse une des extrémités de la bague sans être en contact avec l'autre, cela provoque alors la rotation de la bague sur elle-même. On notera, en outre, que, très souvent, les rotules présentent un méplat à leur sommet, afin de permettre une fixation du tourillon sur un support par rivetage. Il en résulte que les tolérances sur la position des extrémités de la bague sont étroites. Il paraît donc nécessaire d'immobiliser fermement la bague par rapport à la cage, pour empêcher sa rotation. Pour ce faire, il a déjà été proposé (FR-A 2 439 901) de positionner la bague par des portions planes de celles-ci coopérant avec des surfaces planes de la cage. Dans ce document, la bague exerce cependant une pression sur le tourillon après le montage.

Un autre inconvénient des formes de bagues trop proches de celles d'un arc de cercle est qu'elles obligent à prévoir des fentes larges, sourtout du côté de leur débouché vers l'extérieur, pour permettre une mise en place facile de la bague. Des fentes trop larges diminuent la résistance mécanique de la cage. D'un autre côté, des fentes très étroites, si elles peuvent faciliter la solution du problème de la rotaton de la bague, présentent des difficultés d'obtention.

La présente invention a pour but d'éviter ces divers inconvénients, et de fournir une articulation à rotule dont le montage, en une seule opération, entraîne le minimum de risque d'incidents, et qui soit cependant simple et facile à obtenir.

L'invention fournit en conséquence une articulation démontable à rotule, comprenant d'une part une rotule sphérique, solidaire d'un tourillon et, d'autre part, une cage présentant une cavité adaptée à recevoir la rotule, reliée à l'extérieur par un canal pour permettre l'introduction de la rotule, ladite cage étant pourvue par ailleurs de moyens de fixation à un support, et d'une bague élastique, dans sons ensemble en forme de C, dont le corps entoure ladite cage, et dont les extrémités pénètrent dans deux fentes de la cage, ces fentes étant disposées de part et d'autre dudit canal et débouchant dans celui-ci pour permettre aux extrémités de la bague de faire saillie à l'intérieur du canal et de retenir la rotule dans la cavité, ces fentes étant obliques par rapport à l'axe du canal, et s'écartant du centre de la cavité en se rapprochant dudit axe, cette articulation ayant pour particularité que, lorsque la rotule est absente, la bague, d'une part, exerce sur la cage une force de pression à peu près parallèle à l'axe du canal en deux points situés de part et d'autre de celui-ci et écartés de cet axe, et, d'autre part, exerce d'autres forces de pression sur la face interne de la fente par l'intermédiaire de deux bossages, à convexité tournée vers l'intérieur de la bague, et formés sur celle-ci, ou d'une saillie prévue sur ladite face interne de la fente, et, lorsque la rotule est plaquée dans la cavité, le tourillon étant coaxial au canal, la bague n'est en contact ni avec la rotule, ni avec le tourillon et occupe la même position que lorsque la rotule est absente

Par "face interne" d'une fente, on entend celle qui est la plus proche du centre de la cavité.

Grâce à la disposition géométrique indiquée, un couple important s'oppose à la rotation de la bague sur elle-même, tant avant le montage que pendant celui-ci.

En outre, le démontage peut être effectué en introduisant un outil entre la bague et la cage, dans la zone de leur sommet, où ne se trouvent pas les points d'appui qu'on vient de citer.

Les deux modalités proposées en alternative our les fentes et les extrémités de la bague permettent d'atteindre les mêmes résultats : une fente ni trop large ni trop étroite, donc n'affaiblissant pas exagérément la cage mais facile à obtenir, et un appui à peu près central de la partie d'extrémité de la bague sur la face interne de la fente, afin d'éviter une torsion éventuelle de la bague sous l'effet d'un grain de poussièère par exemple.

Par ailleurs, tout risque de corrosion par contact de la bague avec la rotule ou son tourillon est évité, en même temps que le bruit causé par les déplacements de la bague par rapport à la cage. L'usure de celle-ci au contact de la bague est également réduite.

Les deux modalités indiquées plus haut, à savoir les bossages prévus sur la bague et la nervure sur la face interne de la fente ont toutes deux pour effet de procurer un positionnement rigoureux des extré mités de la bague avec une largeur de fente compatible avec une obtention aisée de la cage par moulage. L'emploi des bossages exige un formage complémentaire de la bague alors que la nervure de la fente rend un peu plus difficile le moulage de la cage. Le choix est une affaire d'opportunité, le formage de l'acier et le moulage de matière plastique étant souvent réalisés en des lieux différents.

De préférence, la cage présente une rainure périphérique dans laquelle est logée la partie de la bague qui est à l'extérieur des fentes, lesdits points d'appui de la bague sur la cage se trouvant au fond de cette rainure, et les fentes débouchant au fond de cette rainure, et, avantageusement, le fond de la rainure, dans la région de la face externe de la cage qui porte lesdits points d'appui, est à peu près plat, et perpendiculaire à l'axe du canal, à l'exception éventuelle de bossages constituant lesdits points d'appui.

Suivant des modalités avantageuses :
- la face externe de la cage présente au moins un bossage adjacent à la rainure, présentant du côté de la rainure une face oblique pour servir de point d'appui à un outil pour soulever la bague,
- la bague présente, dans sa région centrale, une partie à concavité tournée vers l'intérieur, de courbure plus forte que l'ensemble de la bague, et de préférence, la région centrale de la bague, de part et d'autre de la partie à forte courbure, est sensiblement plane,
- les parties d'extrémités de la bague sont sensiblement rectilignes, et se terminent par un angle rentrant, et les zones situées de chaque côté de cet angle sont pliées vers l'intérieur.

D'autres particularités avantageuses, qu'on va maintenant décrire, sont, de préférence, associées aux modalités de l'invention pour procurer une articulation ayant les meilleures performances. On doit cependant observer que ces particularités peuvent être, éventuellement, associées à d'autres types d'articulation à rotule.

Dans le cas où une articulation à rotule comporte une cage présentant une cavité qui reçoit la rotule avec un certain jeu, et où cette cage exerce en permanence sur la rotule une force perpendiculaire à la direction du canal d'entrée de la rotule, ce qui est le cas lorsque l'articulation est reliée à un ressort à gaz, il est avantageux de prévoir que :
- un évidement est formé dans la cage à proximité de la zone où cette force applique la paroi de la cavité contre la rotule et
- le fond de cet évidement débouche dans la cavité,ou est à une distance de cette cavité qui est calculée pour que, sous l'effet de cette force, la paroi de la cavité se déforme au contact de la rotule, si bien que, dans cette zone, le rayon de la paroi devient égale, sans jeu, à celui de la rotule, ce qui évite tout jeu dans une direction différente de celle de la force, et maintient la rotule dans une position fixe. Avantageusement, la matière de la cage est plus déformable que celle de la rotule, et l'évidement ne débouche pas dans la cavité. Avantageusement aussi, l'évidement est constitué pa le fond d'un trou de fixation de la cage sur un support.

Cette modalité est intéressante dans l'industrie automobile, à laquelle la cage à rotule qu'on décrit est particulièrement destinée, car il est souvent nécessaire de prévoir un certain jeu dans la cavité, pour parer aux irrégularités provenant par exemple du fait que la rotule supporte une couche de peinture dont l'épaisseur ne peut être garantie avec une très grande précision.

Une autre modalité, qui répond à la même préoccupation, consiste à prévoir que, la cage étant de préférence en une matière plus déformable que la rotule, la cavité et/ou le canal présentent, par rapport à leur surface théorique sphérique ou cylindrique, des irrégularités constituant des rainures et/ou des nervures, qui permettent l'adaptation à des variations du diamètre de la rotule par déformation locale de ces irrégularités, et/ou qui permettent également la constitution de réserves de lubrifiant.

De préférence, ces irrégularités correspondent au fait que le canal et/ou la cavité ont une section polygonale.

Si l'articulation à rotule est soumise à une force permanente perpendiculaire à la direction du canal, ou faisant un angle important avec cette direction, il est préférable de prévoir que les irrégularités sont absentes de la zone où cette force applique la paroi de la cavité contre la rotule.

Deux autres modalités intéressantes sont relatives à la solution de problèmes qu'on rencontre fréquemment dans l'industrie automobile.

Le premier de ces problèmes est relatif à la protection de la zone de liaison entre la cage à rotule et un ressort à gaz qui la porte. Il s'agit soit d'empêcher la corrosion dans cette zone, soit d'éviter que l'usager puisse venir en contact avec une tige de ressort à gaz, qui porte toujours une petite quantité de lubrifiant.

Dans ce cas, on prévoit avantageusement que la cage à rotule présente, à son extrémité de fixation, une gorge et un épaulement qui servent de logement et de butée pour une pièce déformable à froid ou à chaud, d'étanchéité ou de protection, cette pièce venant en appui contre le corps du ressort à gaz, ou supportant un manchon protégeant la tige du ressort à gaz.

Un autre problème rencontré fréquemment est celui de la transmission du courant vers un support électrique conducteur, tel qu'un ressort à gaz. Les cosses métalliques usuelles, qui sont montées en bout de la cage à rotule, n'assurent un contact électrique convenable avec le support, que dans le cas où celui-ci est vissé à fond du logement et vient en appui contre la cage à rotule. Un desserrage produit un contact incertain.

Pour résoudre ce problème, on prévoit dans la cage à rotule un trou pour auto-taraudage, présentant des rainures longitudinales, et on loge, dans une de ces rainures au moins, et de préférence dans deux rainures disposées symétriquement par rapport à l'axe, une patte conductrice solidaire électriquement de la cosse. On visse ensuite le ressort à gaz, ou tout autre pièce convenable, par auto-taraudage, les filets de la pièce mâle mordant dans les parties en saillie entre les rainures du trou, et mordant également partiellement dans la patte conductrice, ce qui a pour effet, au minimum, d'éliminer les restes de peinture, et d'assurer un bon contact électrique même lorsque le vissage n'est pas allé jusqu'au fond.

D'autres modalités et avantages de l'invention ressortiront de la description qui va suivre, relative à des exemples pratiques de réalisation, et illustrée à l'aide des dessins, parmi lesquels :

Figure 1 est une vue en élévation et coupe partielle d'une articulation selon l'invention, avant la mise en place de la rotule dans son logement.

Figure 2 est une coupe agrandie selon la ligne II-II de la figure 1, la rotule étant en place dans son logement.

Figure 3 est une vue de côté de la bague.

Figures 4 et 5 sont des vues d'une extrémité de la bague, selon les flèches IV et V des figures 3 et 4.

Figure 6 est une demi-coupe analogue à la figure 2, montrant une variante.

Figure 7 est une vue en perspective d'une extrémité de la bague.

Figure 8 est une vue en coupe d'une variante de la cage à rotule, la rotule et la bague étant enlevées.

Figure 9 est une coupe selon la ligne IX-IX de la figure 8.

Figures 10 et 11 sont des vues de dessous et en coupe de la cage, montrant une modalité particulière.

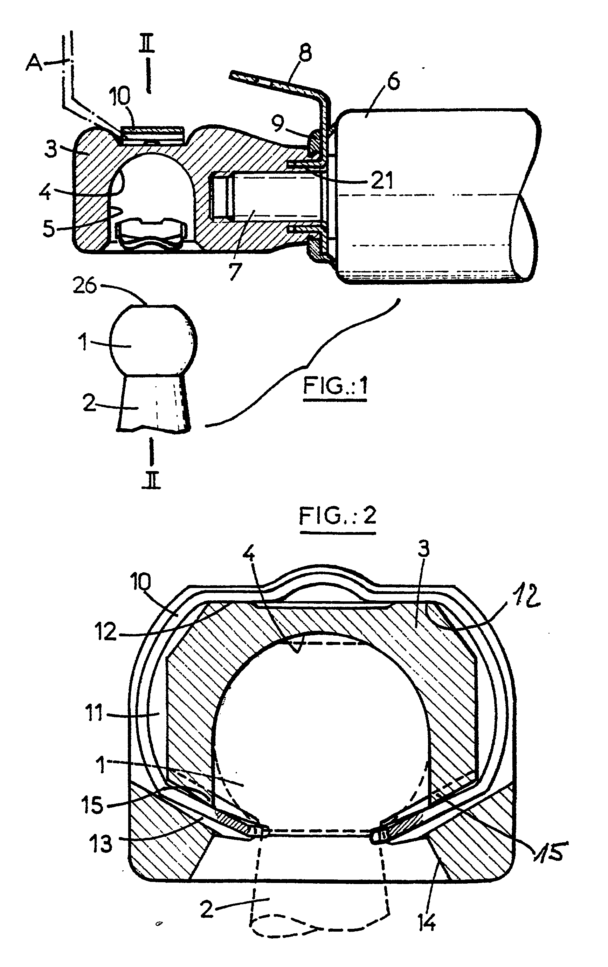

La figure 1 montre une articulation comprenant d'une part une rotule 1, portée par un tourillon 2, de type classique. Les formes et dimensions de ces rotules et tiges sont normalisées, notamment chez les constructeurs automobiles. L'articulation comprend, par ailleurs, une cage à rotule 3 qui présente une cavité 4, de forme hémisphérique, destinée à recevoir la rotule, et débouchant à l'extérieur par un canal 5, de même diamètre.

La cage à rotule 3 est pourvue, par ailleurs, de moyens de fixation à un support, qui peut être un ressort à gaz 6, représenté en partie seulement sur la figure. Dans le cas représenté, ces moyens consistent en un trou taraudé 7, dont l'axe est perpendiculaire à celui du canal 5 et qui croise celui-ci au centre géométrique du logement hémisphérique 4, bien que cela ne soit pas indispensable. A la place du trou taraudé 7, on peut prévoir un logement pour auto-taraudage comme on le verra plus loin, ou encore un autre moyen de fixation. La référence 8 désigne une cosse de contact électrique, montée sur l'extrémité de la cage et immobilisée grâce à des pattes qui pénètrent dans des trous prévus autour du trou de fixation 7, et associée à un capuchon 9, destiné à protéger contre la corrosion le contact entre le ressort à gaz 6 et la cage à rotule, ainsi que le fond du ressort à gaz lui-même.

La cage à rotule est en matière plastique moulée.

Une bague élastique 10, en forme de C, entoure partiellement la cage 3 rotule au voisinage du logement 4. Elle sera décrite avec plus de précision dans la suite.

Le corps de la cage à rotule présente, à sa surface extérieure, dans la région du logement 4, une rainure 11. Cette rainure s'étend sur un peu plus de 180° de la périphérie de la cage, partant du débouché d'une fente 13, passant au-dessus du fond du logement 4, et revenant, de l'autre côté de la cage, s'arrêter au débouché de l'autre fente 13. Dans la partie sommitale, c'est-à-dire la partie opposée à l'ouverture du canal 5, le fond de la rainure est sensiblement plan, c'est-à-dire perpendiculaire à l'axe du canal 5, avec toutefois deux bossages 12, visibles aux figures 2 et 6, qui font saillie sur le fond de la rainure. A chacune de ses extrémités, la rainure 11 communique avec une fente 13, à section constante sur toute sa longueur qui traverse la paroi de la cage à rotule, pour déboucher dans le canal 5, audessous de la jonction de celui-ci avec le logement 4, à proximité d'une partie évasée 14, par laquelle ce canal 5 débouche vers l'extérieur. Une nervure 15, qui s'étend sur toute la longueur de la fente, est prévue sur la paroi interne de la fente, c'est-à-dire la paroi qui est du côté du logement 4. La direction générale de la fente 13 fait un angle d'environ 60° avec l'axe du logement 5, les deux fentes convergeant vers l'axe du canal 5, en direction de l'extérieur de la cage, c'est-à-dire à l'opposé du logement 4. La face externe de la fente 13, c'est-à-dire celle qui est la plus loin du logement 4, est sensiblement plane, et se prolonge jusqu'à la surface extérieure de la cage à rotule, en constituant la fin de la rainure 11. Deux bossages 16 et 17 sont prévus sur la face sommitale de la cage à rotule, c'est-à-dire du côté opposé au canal 5, l'un du côté des moyens de fixation 7, l'autre du côté opposé. Ces bossages sont adjacents à la rainure 11, et ils présentent, vers cette rainure, une face descendante, 18-19, inclinée à 45°.

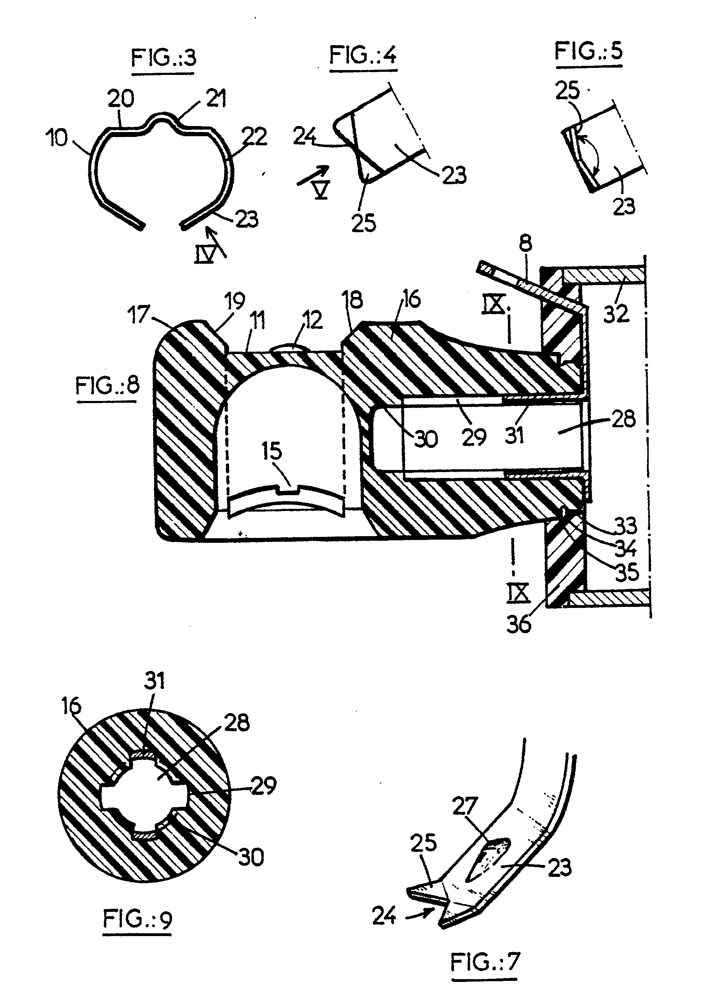

Si on se reporte maintenant à la figure 3, qui représente la bague élastique 10 au repos, on constate qu'elle a une forme générale en C, symétrique, avec un corps 20 à peu près plat, mais pourvu à sa partie centrale d'une saillie 21, à forte convexité vers l'extérieur du C. Le corps 20 est prolongé par deux ailes en arc de cercle 22, qui font un angle d'environ 45° avec le corps 20, et s'étendent sur environ 90°. Ces ailes 22 se prolongent par des parties d'extrémités 23, qui sont sensiblement rectilignes, et convergent l'une vers l'autre.

Les figures 4 et 5 montrent que, en plan, ces parties d'extrémités sont terminées par un angle rentrant 24, et les zones 25 qui sont de chaque côté de cet angle rentrant sont légèrement pliées vers l'intérieur.

La figure 7 montre la même disposition, mais les angles ont été exagérés pour une meilleure compréhension. Si on regarde, en effet, ces parties d'extrémités en bout, comme indiqué à la figure 5, on constate qu'elles ne sont que légèrement pliées de façon à former une sorte de gouttière, dont la concavité est tournée vers l'intérieur de la bague, et cette gouttière est assez peu accusée, son angle au sommet est de l'ordre de 160°.

Si on se reporte de nouveau à la figure 2, on constate que la bague 10, quand elle est en place sur la cage à rotule 3, est en appui sur les deux points d'appui 12 et sur les deux nervures 15, qui la maintiennent par conséquent en tension, l'écart entre les parties d'extrémité 23 étant donc plus important qu'il ne l'est au repos. Il est important que cet écart soit supérieur à la dimension d'un méplat 26 qui est prévu, de façon classique, au sommet de la rotule 1. Si ce n'était pas le cas, en effet, il serait impossible d'introduire la rotule dans son logement, la bague étant en place, en une seule opération. Il s'agit, bien entendu, de la distance entre les parties d'extrémités 23, mesurées dans le plan médian de la bague, qui est aussi un plan médian pour la rotule.

En effet, la forme en angle rentrant 24 des extrémités de parties 23 est adaptée à la forme circulaire de la rotule. Comme on peut le voir sur la figure 2, l'écart entre les parties 23 est également supérieur au diamètre du collet par lequel le tourillon 2 se raccorde à la rotule 1, ce qui permet un débattement angulaire du tourillon par rapport à la cage à rotule 3 de quelques degrés, sans qu'il y ait contact entre la tige 2 et la bague 10. Bien entendu, l'écartement entre les parties terminales 23 de la bague est largement inférieur au diamètre de la rotule 1 elle-même, sinon celle-ci pourrait s'échapper.

La bague 10 est constituée, comme on l'aura deviné, à partir d'une lame d'acier.

A la figure 1, on a représenté en A la position d'un outil qu'on introduirait sous la partie fortement convexe 21 de la bague 10 en vue de soulever celle-ci pour dégager la rotule 1. On constate que l'opération est facilitée par les bossages 16 et 17 et leurs flancs inclinés 18-19. On peut observer que la partie fortement convexe 21 n'est pas absolument nécessaire pour introduire l'outil, il suffirait, par exemple, que les bords latéraux de la bague soient légèrement relevés vers le haut de la figure 1. Cette disposition, cependant, aurait le désavantage d'entraîner une augmentation de la raideur de la bague 10. La partie fortement convexe 21 a, au contraire, pour effet, d'augmenter de façon appréciable la flexibilité de cette bague, ce qui est un effet favorable.

Les figures 6 et 7 sont relatives à l'autre modalité de la présente invention, à savoir celle où, au lieu de la rainure 15, on a prévu un bossage sur la bague. La figure 6 représente un dispositif en tous points conforme à celui de la figure 2, à la seule différence que la nervure 15 a été supprimée, et que, en contrepartie, la zone centrale de la partie d'extrémité 23 de la bague 10 présente un bossage 27, à convexité tournée vers l'intérieur de la bague 10, et qui vient en contact avec la face interne de la fente 13.

Comme le montre mieux la figure 7, le bossage 27 est allongé le long de l'axe de la partie d'extrémité 23 de la bague. Cette disposition a pour effet d'augmenter la raideur de la bague dans cette région, où elle doit servir au verrouillage de la rotule. Comme on l'a dit plus haut, la figure 7 montre une vue volontairement déformée pour faciliter la compréhension.

Sur les figures 2 et 6, les fentes 13 sont représentées avec une forme rectiligne. Il est possible, tout en leur conservant une largeur sensiblement constante pour ne pas affaiblir la cage, de leur donner une forme incurvée qui peut faciliter l'introduction de la bague. Avantageusement, elles auront une forme d'arc de cercle dont le centre est dans le plan médian de la cage. Le démoulage de la cage s'effectuera alors par pivotement des deux moitiés du moule autour de ce centre.

La figure 8 montre une coupe d'une cage à rotule, dans laquelle la rotule elle-même et la bague sont supposées enlevées, mais qui est équipée par ailleurs d'une cosse électrique 8, fixée d'une manière différente de celle de la figure 1.

La cage à rotule, en effet, au lieu d'un trou taraudé 7, présente un trou pour auto-taraudage 28. Comme on le voit mieux à la figure 9, ce trou, à section de forme générale circulaire, présente dans sa paroi quatre larges rainures longitudinales 29, séparées par quatre nervures longitudinales 30. Selon la technique usuelle, lorsqu'on visse une pièce mâle filetée convenable dans un tel trou, les filets de cette pièce mâle viennent mordre dans les nervures 30, pour assurer la fixation. Dans le cas présent, la cosse électrique 8 comporte deux pattes 31, qui sont enfilées dans deux rainures 29 diamétralement opposées, dans faire saillie au-delà des nervures 30. Lorsque la pièce filetée mâle est insérée dans le trou 28, ses filets viennent mordre sur les pattes 31, mais moins fortement que dans les nervures 30. On assure ainsi un bon contact électrique dès le début de la mise en place de la pièce mâle, avec décapage éventuel des restants de peinture, maîtres grasses, ou autres impuretés non conductrices qui pourraient subsister sur la pièce mâle.

Dans le cas présent, cette pièce mâle constitue l'extrémité d'une tige de piston de ressort à gaz, non représentée. Le repère 32 se réfère à l'extrémité d'un tube de protection de cette tige de piston contre es contacts non désirés. Pour fixer de façon efficace ce tube 32 à la cage à rotule, celle-ci présente, à son extrémité, une partie cylindrique rétrécie 33, qui se termine sur une gorge 34, adacent à un épaulement 35 du corps de la cage à rotule. La gorge 34 et l'épaulement 35 servent respectivement de zones d'accrochage et de butées à un disque 36, en matière souple telle que du caoutchouc, qui est enfilé d'une part sur la cage à rotule et, d'autre part, dans le tube 32. On assure ainsi une fixation efficace, durable et étanche. Ce mode de fixation est le même que celui qui est employé pour le joint 9, visible à la figure 1, et qui sert à obtenir directement l'étanchéité, et la protection contre la corrosion, entre la cage à rotule et le corps 6 d'un ressort à gaz.

On observera que le fond du trou 28 avance jusqu'à proximité de la cavité 4 qui sert de logement à la rotule, si bien qu'il subsiste seulement un voile de faible épaisseur entre cette cavité et le fond du trou 28. Cette disposition intentionnelle a le résultat suivant : attendu que le ressort à gaz exerce en permanence sur la cage à rotule une action qui tend à pousser la paroi de la cavité contre la rotule, dans une direction perpendiculaire à l'axe du canal 5, la matière plastique dont est faite la cage à rotule se déforme pour épouser celle de la rotule. On obtient ainsi un contact permanent et fixe entre la rotule et sa cage, même si la cavité a été prévue avec un diamètre légèrement supérieur au diamètre nominal de la rotule, de façon à compenser les éventuelles irrégularités dues à la présence de peinture, notamment.

On conçoit qu'on pourrait supprimer le voile et obtenir un résultat analogue en déformant seulement les bords de la zone où le trou 28 déboucherait dans la cavité 4, il y a cependant lieu de noter que, dans cette situation, la protection de l'extrémité du ressort à gaz contre la corrosion serait moins bien assurée.

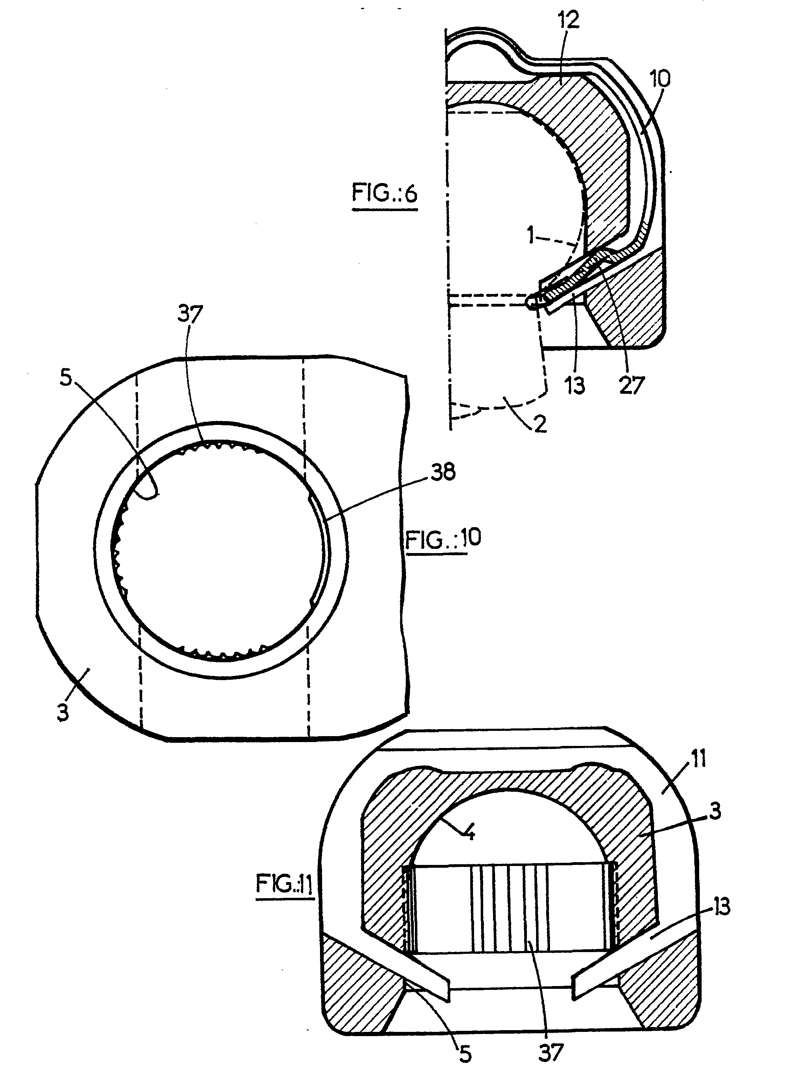

La figure 11 représente une cage à rotule qui est très semblable à celle de la figure 6, à part la présence, dans le canal 5, et la partie adjacente de la cavité 4, d'une série de nervures 37, parallèles à l'axe du canal 5. Ces nervures 37, dont la forme est mieux visible sur la figure 10, servent à obtenir un résultat analogue à celui qui est procuré par le voile situé au fond du trou 28, et dont on a parlé plus haut, à savoir compenser les variations inévitables du diamètre de la rotule. Les nervures 37 ont une autre utilité, car les vides qui se trouvent entre ces nervures peuvent servir de réserves de matières lubrifiantes. On observera sur la figure 10, qu'une partie 38 de la périphérie du canal 5 ne comporte pas de nervures, mais présente au contraire une surface lisse. Il s'agit de la partie qui est normalement appuyée contre la rotule par l'effet de la force permanente du ressort à gaz. On observera que les deux effets produits par les rainures, compensation des irrégularités de diamètre et formation d'une réserve de lubrifiant, peuvent être obtenus avec d'autres types d'irrégularités de surface. On peut prévoir par exemple des rainures assez nombreuses et à bords lisses, toujours dirigées parallèlement à l'axe du canal 5. On peut également donner à la cavité 4 et/ou au canal 5 une forme polygonale. Selon le rapport des duretés de la matière dont est faite la cage et de la matière dont est faite la rotule, l'importance des irrégularités sera plus ou moins grande.

## Revendications

1. Articulation démontable à rotule, comprenant d'une part une rotule sphérique (1), solidaire d'un tourillon (2) et, d'autre part, une cage (3) présentant une cavité (4) adaptée à recevoir la rotule, reliée à l'extérieur par un canal (5) pour permettre l'introduction de la rotule, ladite cage étant pourvue par ailleurs de moyens (7) de fixation à un support, et d'une bague élastique (10), dans son ensemble en forme de C, dont le corps entoure ladite cage, et dont les extrémités (23) pénètrent dans deux fentes (13) de la cage, ces fentes étant disposées de part et d'autre dudit canal et débouchant dans celui-ci pour permettre aux extrémités de la bague de faire saillie à l'intérieur du canal et de retenir la rotule dans la cavité, ces fentes étant obliques par rapport à l'axes du canal, et s'écartant du centre de la cavité en se rapprochant dudit axe, caractérisée en ce que, lorsque la rotule est absente, la bague, d'une part, exerce sur la cage une force de pression à peu près parallèle à l'axe du canal en deux points (12) situés de part et d'autre de celui-ci et écartés de cet axe, et, d'autre part, exerce d'autre forces de pression sur la face interne de la fente (13) par l'intermédiaire de deux bossages (27) à convexité tournée vers l'intérieur de la bague, et formés sur celle-ci, ou d'une saillie (15) prévue sur ladite face interne de la fente, et en ce que, lorsque la rotule est plaquée dans la cavité, le tourillon étant coaxial au canal, la bague n'est en contact ni avec la rotule (1), ni avec le tourillon (2), et occupe la même position que lorsque la rotule est absente.

2. Articulation selon la revendication 1, caractérisée en ce que la cage (3) présente, dans sa partie opposée au canal (5), une zone sensiblement plane et perpendiculaire à l'axe du canal, et sur laquelle se trouvent lesdits points (12) d'appui de la bague (10) sur la cage.

3. Articulation selon l'une des revendications 1 ou 2, caractérisée en ce que la cage (3) présente une rainure périphérique (11), dans laquelle débouchent les fentes (13), et où est logée la partie de la bague (10) qui est à l'extérieur des fentes, lesdits points d'appui (12) de la bague sur la cage se trouvant au fond de cette rainure, ce fond comprenant éventuellement ladite zone sensiblement plane et perpendiculaire à l'axe du canal.

4. Articulation selon l'une des revendications 1 à 3, caractérisée en ce que la face externe de la cage (3) présente au moins un bossage (17, 18) adjacent à la rainure (11), présentant du côté de la rainure une face oblique (18, 19) pour servir de point d'appui à un outil ( A ) pour soulever la bague.

5. Articulation selon l'une des revendications 1 à 4, caractérisée en ce que la bague (10) présente, dans sa région centrale, une partie (21) à concavité tournée vers l'intérieur, de courbure plus forte que l'ensemble de la bague.

6. Articulation selon l'une des revendications 1 à 5, caractérisée en ce que la région centrale (20) de la bague, à l'exception éventuellement de la partie (21) à forte coubure, est sensiblement plane.

7. Articulation selon l'une des revendications 1 à 6, dans laquelle les parties d'extrémité (23) de la bague (10) son sensiblement rectilignes, caractérisée en ce que lesdites parties d'extrémité se terminent par un angle rentrant (24), et les zones (25) situées de chaque côté de cet angle sont pliées vers l'intérieur.

8. Articulation selon l'une des revendications 1 à 6, caractérisée en ce que les fentes (13) ont une section sensiblement constante sur toute leur longueur.

9. Articulation selon l'une des revendications 1 à 8, dans laquelle la bague (10) exerce une pression sur la face interne de la fente (13) par l'intermédiaire d'une saillie, caractérisée en ce que celle-ci est une nervure (15) s'étendant sur toute la longueur de la fente.

10. Articulation selon l'une des revendications 1 à 9, caractérisée en ce que, dans le cas où la cage (3) présente une cavité (4) qui reçoit la rotule (1) avec un certain jeu, et où ladite cage exerce en permanence sur la rotule une force perpendiculaire à la direction du canal d'entrée de la rotule, ce qui est le cas lorsque l'articulation est reliée à un ressort à gaz, un évidement (28) est formé dans la cage à proximité de la zone où cette force applique la paroi de la cavité (4) contre la rotule (1) et le fond de cet évidement débouche dans la cavité, ou est à une distance de cette cavité qui est calculée pour que, sous l'effet de cette force, la paroi de la cavité se déforme au contact de la rotule, si bien que, dans cette zone, le rayon de la paroi devient égal, sans jeu, à celui de la rotule.

11. Articulation selon la revendication 10, caractérisée en ce que la matière de la cage est plus déformable que celle de la rotule, et l'évidement n débouche pas dans la cavité.

12. Articulation selon l'une des revendications 10 ou 11, caractérisée en ce que l'évidement (28) est constitué par le fond d'un trou de fixation de la cage sur un support.

13. Articulation selon l'une des revendications 1 à 12, caractérisée en ce que la cavité (4) et/ou le canal (5) présentent,par rapport à leur surface théorique sphérique ou cylindrique, des irrégularités (37) constituant des rainures et/ou des nervures, qui permettent l'adaptation à des variations du diamètre de la rotule (1) par déformation locale de ces irrégularités, et/ou qui permettent également la constitution de réserves de lubrifiant.

14. Articulation selon la revendication 13, caractérisée en ce que ces irrégularités (37) correspondent au fait que le canal et/ou la cavité ont une section polygonale.

15. Articulation selon l'une des revendications 13 ou 14, caractérisé en ce que, dans le cas d'une articulation à rotule soumise à une force permanente perpendiculaire à la direction du canal, ou faisant un angle important avec cette direction, les irrégularités (37) sont absentes de la zone (38) où cette force applique la paroi de la cavité contre la rotule.

16. Articulation selon l'une des revendications 1 à 15, caractérisée en ce que la cage à rotule (3) présente, à son extrémité de fixation, une gorge (34) et un épaulement (35) qui servent de logement et de butée pour une pièce (36) déformable à froid ou à chaud, d'étanchéité ou de protection.

17. Articulation selon l'une des revendications 1 à 16, et dont la cage à rotule est pourvue d'une cosse (8) à relier électriquement à un support, caractérisée en ce que ladite cage comporte un trou (28) pour auto-taraudage présentant des rainures (29), et en ce qu'au moins une patte conductrice (31), solidaire électriquement de la cosse, est enfilée dans une rainure (29), pour être mordue par une pièce mâle à fixation par auto-taraudage.

**Patentansprüche**

1. Zerlegbares Kugelgelenk mit einerseits einer sphärischen Gelenkkugel (1), die eins mit einem Lagerzapfen (2) ist, und andererseits mit einem Gehäuse (3), das eine Aushöhlung (4) zur Aufnahme der Kugel aufweist, die über einen Gang (5) von außen her zugänglich ist, um ein Einsetzen der Kugel zu ermöglichen, wobei das Gehäuse weiterhin mit Vorrichtungen (7) zur Befestigung an einem Träger und mit einem Spannring (10) im wesentlichen in C-Form versehen ist, dessen Körper das Gehäuse umgibt und dessen Enden (23) in zwei Schlitze (13) des Gehäuses eindringen, die zu beiden Seiten des Ganges angeordnet sind und in diesen münden, um den Enden des Ringes ein Hineinragen in den Gang zu ermöglichen und damit die Kugel in der Aushöhlung zurückzuhalten, wobei die Schlitze schräg zur Gangachse ausgerichtet und vom Zentrum der Aushöhlung entfernt sind, und sich der erwähnten Achse nähern, dadurch gekennzeichnet, daß, wenn keine Kugel anwesend ist, der Ring einerseits auf das Gehäuse eine in etwa parallel zur Gangachse ausgerichtete Anpreßkraft in zwei Punkten (12) ausübt, die sich zu beiden Seiten des Ganges und im Abstand zu der Achse befinden und andererseits weitere Anpreßkräfte auf die innere Fläche des Schlitzes über zwei mit ihrem Bauch zum Inneren des Ringes und auf diesem geformte Buckel (27) oder über einen Vorsprung (15) auf der inneren Fläche des Schlitzes ausübt und dadurch, daß, wenn die Kugel in der Aushöhlung angeordnet ist, der Lagerzapfen koaxial mit dem Gang ist und der Ring weder die Kugel (1) noch den Lagerzapfen (2) berührt und dieselbe Position inne hat wie bei nicht anwesender Kugel.

2. Vorrichtung nach Anspruch 1, dadurch gekennzeichnet, daß das Gehäuse (3) in seinem dem Gang (5) gegenüberliegenden Bereich eine deutlich ebene und senkrecht zur Gangachse ausgerichtete Zone aufweist, auf der sich die Anpreßpunkte (12) für den Ring (10) auf dem Gehäuse befinden.

3. Vorrichtung nach einem der Ansprüche 1 oder 2, dadurch gekennzeichnet, daß das Gehäuse eine im Umfang angeordnete Einkerbung (11) aufweist, in die die Schlitze (13) münden und in der der Teil des Ringes (10) aufgenommen ist, der sich außerhalb der Schlitze befindet und auf dessen Boden sich die Anpreßpunkte (12) des Ringes auf dem Gehäuse befinden, wobei dieser Boden gegebenenfalls die erwähnte deutlich ebene und senkrecht zur Gangachse ausgerichtete Zone enthält.

4. Vorrichtung nach einem der Ansprüche 1 bis 3, dadurch gekennzeichnet, daß die äußere Fläche des Gehäuses (3) mindestens einen der Einkerbung (11) benachbarten Buckel (17, 18) aufweist, der zur Einkerbung in eine geneigte Fläche (18, 19) aufweist, um als Auflagepunkt für ein Werkzeug (A) zum Entfernen des Ringes zu dienen.

5. Vorrichtung nach einem der Ansprüche 1 bis 4, dadurch gekennzeichnet, daß der Ring (10) in seinem zentralen Bereich einen nach innen gekrümmten Teil (21) aufweist, dessen Krümmung stärker als die des gesamten Ringes ist.

6. Vorrichtung nach einem der Ansprüche 1 bis 5, dadurch gekennzeichnet, daß der zentrale Bereich (20) des Ringes gegebenenfalls mit Ausnahme des Bereiches (23) mit starker Krümmung im wesentlichen eben ist.

7. Vorrichtung nach einem der Ansprüche 1 bis 6, in der die Endbereiche (23) des Ringes (10) im wesentlichen gerade sind, dadurch gekennzeichnet, daß die Endbereiche durch einen einspringenden Winkel (24) abgeschlossen werden und daß die zu beiden Seiten dieses Winkels angeordneten Zonen (25) nach innen gebogen sind.

8. Vorrichtung nach einem der Ansprüche 1 bis 6, dadurch gekennzeichnet, daß die Schlitze (13) einen im wesentlichen konstanten Querschnitt über ihre gesamte Länge aufweisen.

9. Vorrichtung nach einem der Ansprüche 1 bis 8, in der der Ring (10) auf die innere Fläche des Schlitzes (13) über einen Vorsprung Druck ausübt, dadurch gekennzeichnet, daß der Vorsprung eine sich über die gesamte Länge des Schlitzes erstreckende Rippe (15) ist.

10. Vorrichtung nach einem der Ansprüche 1 bis 9, dadurch gekennzeichnet, daß im Fall, daß das Gehäuse (3) eine Aushöhlung (4) aufweist, die die Kugel (1) mit einem gewissen Spiel aufnimmt und wo das Gehäuse dauernd eine senkrecht zur Richtung des Einführganges für die Kugel ausgerichtete Kraft ausübt, wozu es kommt, wenn das Gelenk mit einer Gasfeder verbunden wird, eine Aussparung (28) im Gehäuse in der Nähe des Bereiches geformt ist, wo diese Kraft die.Seitenwand der Aushöhlung (4) gegen die Kugel (1) drückt, wobei der Boden dieser Aussparung in die Aushöhlung einmündet oder sich in einem so berechneten Abstand dazu befindet, daß sich unter Einwirkung der Kraft der Aushöhlung bei Kontakt mit der Kugel verformt derart, daß in diesem Bereich der Radius der Seitenwand, ohne Spiel, gleich dem der Kugel ist.

11. Vorrichtung nach Anspruch 10, dadurch gekennzeichnet, daß das Gehäusematerial leichter verformbar als das Material der Kugel ist und daß die Aussparung nicht in die Aushöhlung mündet.

12. Vorrichtung nach einem der Ansprüche 10 oder 11, dadurch gekennzeichnet, daß die Aussparung (28) durch den Boden eines Befestigungsloches für das Gehäuse auf einem Träger gebildet wird.

13. Vorrichtung nach einem der Ansprüche 1 bis 12, dadurch gekennzeichnet, daß die Aushöhlung (4) und/oder der Gang (5) in bezug auf ihre theoretisch sphärische oder zylindrische Fläche Unregelmäßigkeiten (37) aufweisen, die Einkerbungen und/oder Rippen darstellen, die eine Anpassung an Abweichungen im Durchmesser der Kugel (1) über örtliche Verformung dieser Unregelmäßigkeiten erlauben und/oder die gleichermaßen die Einrichtung von Schmiermittelreserven erlauben.

14. Vorrichtung nach Anspruch 13, dadurch gekennzeichnet, daß die Unregelmäßigkeiten (37) zueinander passen für den Fall, daß der Gang und/oder die Aushöhlung einen vielwinkligen Querschnitt aufweisen.

15. Vorrichtung nach einem der Ansprüche 13 oder 14, dadurch gekennzeichnet, daß im Fall, daß ein Kugelgelenk einer dauernden senkrecht zur Gangrichtung ausgerichteten Kraft unterworfen wird oder wo diese Kraft einen sehr großen Winkel mit dieser Richtung einschließt, keine Unregelmäßigkeiten (37) in dem Bereich (38) ausgebildet sind, wo diese Kraft die Seitenwand der Aushöhlung gegen die Kugel drückt.

16. Vorrichtung nach einem der Ansprüche 1 bis 15, dadurch gekennzeichnet, daß das Kugelgehäuse (3) an seinem Befestigungsende eine Kehle (34) und eine Schulter (35) aufweisen, die als Aufnahme und Anschlag für ein zur Abdichtung oder zum Schutz dienendes Teil (36) dienen, daß im Warmen oder im Kalten verformbar ist.

17. Vorrichtung nach einem der Ansprüche 1 bis 16, bei der das Kugelgehäuse mit einer elektrisch mit einem Träger zu verbindenden Buchse (8) versehen ist, dadurch gekennzeichnet, daß das Gehäuse ein Loch (28) zum Selbstgewindeziehen besitzt, das Einkerbungen (29) aufweist und das mindestens eine mit der Kausche verbundene Leiterlasche (31) in eine Einkerbung (29) eingefädelt wird, um durch ein männliches Teil zur Befestigung über selbsttätige Gewindebildung ergriffen zu werden.

## Claims

1. Disassemblable ball and socket joint, comprising on the one hand a spherical ball (1) integral with a journal (2) and, on the other hand, a cage (3) exhibiting a cavity (4) adapted to receive the ball, connected to the exterior by a channel (5) to permit the introduction of the ball, said cage further being provided with fixing means (7) to a support, and with a generally C-shaped resilient ring (10), the body of which surrounds said cage, and the ends (23) of which enter two slots (13) in the cage, said slots being arranged on either side of said channel and leading thereinto to permit the ends of the ring to project inside the channel and to retain the ball in the cavity, said slots being oblique relative to the axis of the channel and receding from the centre of the cavity in approaching said axis, characterized in that, when the ball is absent, the ring exerts on the one hand upon the cage a compressive force approximately parallel to the axis of the channel at two points (12) located on either side of the latter and remote from said axis, and exerts, on the other hand other compressive forces upon the interior face of the slot (13) by means of two protuberances (27) convex towards the interior of the ring, and formed thereon, or by a bulge (15) provided on said interior face of the slot, and in that, when the ball is pressed in the cavity, the journal being coaxial with the channel, the ring is not in contact either with the ball (1) or with the journal (2) and occupies the same position as when the ball is absent.

2. Joint according to one of Claim 1, characterized in that the cage (3) exhibits in its part opposite the channel (5) a region which is substantially plane and perpendicular to the axis of the channel, upon which said bearing points (12) of the ring (10) upon the cage are located.

3. Joint according to one of Claims 1 or 2, characterized in that the cage (3) exhibits a circumferential groove (11) into which the slots (13) lead and where that part of the ring (10) which is outside the slots is housed, said bearing points (12) of the ring upon the cage being located at the base of said groove, said base optionally comprising said region which is substantially plane and perpendicular to the axis of the channel.

4. Joint according to one of Claims 1 to 3, characterized in that the exterior face of the cage (3) exhibits at least one protuberance (17, 18) adjacent to the groove (11), exhibiting on the groove side an oblique face (18, 19) to serve as a bearing point for a tool (A) to lift the ring.

5. Joint according to one of Claims 1 to 4, characterized in that the ring (10) exhibits in its central region a part (21) with inward facing concavity, of greater curvature than the ring generally.

6. Joint according to one of Claims 1 to 5, characterized in that the central region (20) of the ring is substantially plane, optionally with the exception of the strongly curved part (21).

7. Joint according to one of Claims 1 to 6, in which the end parts (23) of the ring (10) are substantially straight, characterized in that said end parts terminate in a re-entrant angle (24), and the regions (25) located on each side of said angle are folded inwards.

8. Joint according to one of Claims 1 to 6, characterized in that the slots (13) have a substantially constant cross-section throughout their length.

9. Joint according to one of Claims 1 to 8, in which the ring (10) exerts a pressure upon the interior face of the slot (13) by means of a bulge, characterized in that the latter is a rib (15) extending throughout the length of the slot.

10. Joint according to one of Claims 1 to 9, characterized in that, in the case where the cage (3) exhibits a cavity (4) which receives the ball (1) with some play, and said cage exerts permanently upon the ball a force perpendicular to the direction of the entrance channel of the ball, which is the case when the joint is connected to a compressed gas spring, a recess (28) is formed in the cage in proximity of the region where said force urges the wall of the cavity (4) against the ball (1) and the base of said recess leads into the cavity, or is at a distance from this cavity which is calculated so that the wall of the cavity is deformed in contact with the ball by the effect of this force so that the radius of the wall in said region becomes equal to that of the ball without play.

11. Joint according to Claim 10, characterized in that the material of the cage is more deformable than that of the ball, and the recess does not lead into the cavity.

12. Joint according to one of Claims 10 or 11, characterized in that the recess (28) is constituted by the base of a fixing hole of the cage on a support.

13. Joint according to one of Claims 1 to 12, characterized in that the cavity (4) and/or the channel (5) exhibit, compared with their spherical or cylindrical theoretical surface, irregularities (37) constituting grooves and/or ribs which permit adaptation to variations in the diameter of the ball (1) by local deformation of said irregularities, and/or which likewise permit the formation of reserves of lubricant.

14. Joint according to Claim 13, characterized in that said irregularities (37) are due to the fact that the channel and/or the cavity have a polygonal cross-section.

15. Joint according to one of Claims 13 or 14, characterized in that, in the case of a ball and socket joint subjected to a permanent force perpendicular to the direction of the channel, or forming a large angle with said direction, the irregularities (37) are absent from the region (38) where said force urges the wall of the cavity against the ball.

16. Joint according to one of Claims 1 to 15, characterized in that the ball cage (3) exhibits at its fixing end a groove (34) and a shoulder (35) which serve as housing and as stop for a cold deformable or hot deformable sealing or protecting part (36).

17. Joint according to one of Claims 1 to 16, and the ball cage of which is provided with a lug (8) to be electrically connected to a support, characterized in that said cage comprises a self-tapping hole (28) exhibiting grooves (29), and in that at least one conductive claw (31) electrically integral with the lug is driven into a groove (29) to be gripped by a self-tapping male fixing part.

FIG.:1

FIG.: 2

FIG.:3

FIG.:4

FIG.:5

FIG.:8

FIG.:9

FIG.:7

FIG.:6

FIG.:10

FIG.:11